# EUROPÄISCHE PATENTANMELDUNG

(11) **EP 1 289 196 A1**
(43) Veröffentlichungstag der Anmeldung: **05.03.2003**
(21) Anmeldenummer: 01120398.1
(22) Anmeldetag: 27.08.2001
(51) Int. Cl.: H04L 12/56, H04L 12/28

(54) **Verfahren zur Übermittlung von Paketdaten unterschiedlicher Prioritätsstufen in einem Telekommunikationsnetz**

(71) Anmelder: SIEMENS AKTIENGESELLSCHAFT, 80333 München (DE)
(72) Erfinder: Nemethova, Olivia, 85104 Braitslava (SK)
(74) Vertreter: Peham, Alois, Dipl.-Ing.

(57) **Zusammenfassung**

Es wird ein Verfahren und eine Anordnung zur Steuerung der Übermittlung von Paketdaten unterschiedlicher Prioritätsstufen von einem ersten Modul zu einem zweiten Modul in einem Telekommunikationsnetz angegeben, bei dem während der Datenübermittlung eine Speicherpufferstatusmeldung HS-DSCH-BS vom zweiten Modul an das erste Modul gesandt wird, welche als Parameter eine Prioritätsstufe enthält und zusätzlich eine Information umfasst, welche den aktuellen Füllgrad des Speicherpuffers beim zweiten Modul angibt oder definiert, welcher Umfang von Daten DAT der angegebenen Prioritätsstufe in der verbleibenden Restzeit eines vorab definierten Zeitraums übermittelt werden darf.

## Beschreibung

Die Erfindung betrifft ein Verfahren zur Steuerung der Übermittlung von Paketdaten unterschiedlicher Prioritätsstufen von einem ersten Modul zu einem zweiten Modul in einem Telekommunikationsnetz, insbesondere in einem Mobilfunknetz, wobei zwischen erstem Modul und zweitem Modul Informationen über Art und Menge der zu übermittelnden Daten ausgetauscht werden. Weiterhin betrifft die Erfindung eine Anordnung zur Durchführung des erfindungsgemäßen Verfahrens.

Moderne Telekommunikationsnetze bieten die Möglichkeit Paketdaten mit hohen Datenraten zu übertragen. Auf dem Weg zwischen der Datenquelle und der Datensenke werden diese Daten von verschiedenen Einrichtungen eines Telekommunikationsnetzes empfangen, zwischengespeichert und weitergesendet. Beispiele dafür sind Protokollumsetzer, welche Daten von einem Übertragungsprotokoll in ein anderes umwandeln, Router, welche für die richtige Verteilung sorgen, oder aber auch Einrichtungen in Mobilfunknetzen, welche die Schnittstelle zwischen drahtgebundener Übertragungsstrecke und der Funkstrecke bilden. Die Daten werden dabei beispielsweise mit Hilfe von Prioritätsstufen hinsichtlich ihrer Wichtigkeit, mittels erlaubter Fehlerrate und erlaubter Verzögerung hinsichtlich ihrer Qualität und schließlich auch hinsichtlich verschiedener Datenquellen, beziehungsweise Datensenken unterschieden.

Aufgrund der großen Datenmengen, die in modernen Telekommunikationsnetzen übermittelt werden, und der erwünschten Minimierung der Größe der einzelnen Zwischenspeicher bei gleichzeitiger Maximierung der Datenrate sind Verfahren nötig, die den Ablauf der Datenübermittlung steuern.

Insbesondere bei den Funkschnittstellen in Mobilfunknetzen wird der Umfang der zwischengespeicherten Daten möglichst gering gehalten, da die in einer Funkschnittstelle des Telekommunikationsnetzes zwischengespeicherten Daten bei einem Handover des mobilen Telekommunikationsendgerätes zu einer anderen Funkschnittstelle vor Ort nicht mehr benötigt werden. Die Daten, welche noch nicht an das mobile Telekommunikationsendgerät gesendet wurden, müssen daher beispielsweise von der Datenquelle an die neue Funkschnittstelle übertragen werden. Das Telekommunikationsnetz wird also durch die abermalige Übertragung von Daten zusätzlich belastet.

Aus dem Stand der Technik sind Verfahren zur Steuerung der Übermittlung von Paketdaten bekannt, bei denen zwischen den einzelnen Einheiten eines Telekommunikationsnetzes Informationen über Art und Menge der zu übermittelnden Daten ausgetauscht werden. Je höher der Datenverkehr und je kleiner der Zwischenspeicher ist, umso größer ist auch der Aufwand die Datenübertragung zu steuern. Aus diesem Grund wird zwischen den einzelnen Einheiten eines Telekommunikationsnetzes eine hohe Anzahl von Meldungen mit teils erheblicher Länge ausgetauscht, welche ihrerseits das Telekommunikationsnetz zusätzlich belasten.

Der Erfindung liegt also die Aufgabe zugrunde, ein Verfahren und eine Anordnung zur Steuerung der Übermittlung von Paketdaten unterschiedlicher Prioritätsstufen von einem ersten Modul zu einem zweiten Modul in einem Telekommunikationsnetz, insbesondere in einem Mobilfunknetz, anzugeben, welche das Telekommunikationsnetz vergleichsweise gering belasteten.

Dies geschieht erfindungsgemäß mit einem Verfahren der eingangs genannten Art, bei dem während der Datenübermittlung eine Speicherpufferstatusmeldung vom zweiten Modul an das erste Modul gesandt wird, welche als Parameter eine Prioritätsstufe enthält und zusätzlich eine Information umfasst, welche den aktuellen Füllgrad des Speicherpuffers beim zweiten Modul angibt oder definiert, welcher Umfang von Daten der angegebenen Prioritätsstufe in der verbleibenden Restzeit eines vorab definierten Zeitraums übermittelt werden darf.

Diese Lösung ermöglicht einerseits die Steuerung der Datenübertragung, belastet das Telekommunikationsnetz aufgrund der kurzen Länge der Speicherpufferstatusmeldung aber vergleichsweise wenig. Des weiteren ist auch sowohl der Aufwand zur Erzeugung der Meldung im zweiten Modul, als auch der Aufwand zur Auswertung der Meldung im ersten Modul relativ klein. Im ersten Modul kann daher auf einfache Weise ermittelt werden, ob die Daten einer Prioritätsstufe ab dem Erhalt der Meldung schneller oder langsamer übertragen werden.

Besonders vorteilhaft ist es dabei,
- wenn vom ersten Modul an das zweite Modul eine erste Meldung gesandt wird, welche die Prioritätsstufe und den Umfang der zu übermittelnden Daten enthält,
- wenn vom zweiten Modul an das erste Modul eine zweite Meldung gesandt wird, welcher Umfang von Daten einer bestimmten Prioritätsstufe in einem bestimmten Zeitraum übermittelt werden darf,
- wenn das erste Modul nach Erhalt der zweiten Meldung mit der Übertragung von Daten der vereinbarten Prioritätsstufe beginnt,
- wenn während der Datenübermittlung eine Speicherpufferstatusmeldung vom zweiten Modul an das erste Modul gesandt wird, welche als Parameter eine Prioritätsstufe enthält und zusätzlich eine Information umfasst, welche den aktuellen Füllgrad des Speicherpuffers beim zweiten Modul angibt oder definiert, welcher Umfang von Daten der angegebenen Prioritätsstufe in der verbleibenden Restzeit des mit Hilfe der zweiten Meldung definierten Zeitraums übermittelt werden darf und
- wenn das erste Modul mit Hilfe der Speicherpufferstatusmeldung ermittelt, ob die Daten dieser Prioritätsstufe ab dem Erhalt dieser Meldung schneller oder langsamer übertragen werden.

Dabei wird zwischen den beiden Modulen vor der eigentlichen Datenübermittlung vereinbart, wie diese zu erfolgen hat und zwar durch die Angabe, welcher Umfang von Daten einer bestimmten Prioritätsstufe in einem bestimmten Zeitraum übermittelt werden darf. Während der eigentlichen Datenübertragung kann dann das zweite Modul mit Hilfe einer Speicherpufferstatusmeldung das erste Modul anweisen, die Daten langsamer oder schneller zu übertragen, je nach Auslastung des Zwischenspeichers im zweiten Modul. Die Speicherpufferstatusmeldung ist vergleichsweise kurz und belastet das Telekommunikationsnetz daher wesentlich weniger, als beispielsweise die zweite Meldung, deren Umfang größer ist. Aus diesem Grund kann die Datenübertragung effizienter und innerhalb kürzerer Reaktionszeiten gesteuert werden.

Eine vorteilhafte Ausgestaltung der Erfindung ist auch mit einem Verfahren gegeben,
- bei dem als Telekommunikationsnetz ein UMTS Terrestrial Radio Access Network vorgesehen wird,
- bei dem als erstes Modul ein Serving Radio Network Controller vorgesehen wird und
- bei dem als zweites Modul eine Funkschnittstelle vorgesehen wird.

Die Vorteile der Erfindung treten bei einem UMTS Terrestrial Radio Access Network besonders hervor. Werden Daten von einer Datenquelle über den Serving Radio Network Controller und die Funkschnittstelle an eine Datensenke, beispielsweise ein nach dem UMTS-Standard arbeitendes Mobiltelefon, gesendet, so werden diese vor der Übertragung über die Funkstrecke in der Funkschnittstelle zwischengespeichert. Der Umfang der zwischengespeicherten Daten wird dabei möglichst gering gehalten, da die Daten bei einem Handover des Mobiltelefons zu einer anderen Funkschnittstelle vor Ort nicht mehr benötigt werden. Das Telekommunikationsnetz wird also durch die Übertragung nicht benötigter Daten zusätzlich belastet. Durch die erfindungsgemäße effiziente und reaktionsschnelle Steuerung kann die Übertragung unnötiger Daten weitgehend vermieden werden.

Vorteilhaft ist es weiterhin,
- wenn als Telekommunikationsnetz ein UMTS Terrestrial Radio Access Network vorgesehen wird,
- wenn als erste Meldung eine High Speed Downlink Shared Channel Capacity Request Message vorgesehen wird,
- wenn als zweite Meldung eine High Speed Downlink Shared Channel Capacity Allocation Message vorgesehen wird und
- wenn die Speicherpufferstatusmeldung den Parameter Common Channel Priority Indicator und zusätzlich den Parameter Credits oder eine Information über den momentanen Füllgrad des Speicherpuffers beim zweiten Modul umfasst.

Die High Speed Downlink Shared Channel Capacity Request Message basiert dabei auf der im Kapitel 6.3.3.2 angeführten Downlink Shared Channel Capacity Request Message, die High Speed Downlink Shared Channel Capacity Allocation Message auf der im Kapitel 6.3.3.3 angeführten Downlink Shared Channel Capacity Allocation Message der Technischen Spezifikation "UTRAN Iur interface user plane protocols for Common Transport Channel data streams, 3GPP TS 25.425" vom März 2001.

Die erfindungsgemäße Speicherpufferstatusmeldung wird so auf günstige Weise in den bereits standardisierten Meldungsablauf eingefügt. Eine Umsetzung der Erfindung kann daher vergleichsweise einfach erfolgen.

Eine günstige Ausgestaltung der Erfindung liegt vor, wenn die Speicherpufferstatusmeldung aufgrund eines Ereignisses im Telekommunikationsnetz gesendet wird.

Ein Ereignis im Telekommunikationsnetz ist dabei beispielsweise das Über- oder Unterschreiten eines festgelegten Schwellwertes. Ein Beispiel für einen Schwellwert ist der Füllgrad des Zwischenspeichers im zweiten Modul. Wird dieser Füllgrad überschritten und droht daher ein Überlaufen des Zwischenspeichers wird eine Speicherpufferstatusmeldung an das erste Modul geschickt, welches in Folge die Datenübertragung verlangsamt. Bei Unterschreiten eines anderen Schwellwertes für den Füllgrad wird dagegen eine Speicherpufferstatusmeldung an das erste Modul gesendet, um die Datenübertragung wieder zu beschleunigen. Auf diese Weise kann der Zwischenspeicher optimal ausgenutzt werden, dessen Füllgrad sich im wesentlichen innerhalb des durch die Schwellwerte definierten Bereichs bewegt.

Günstig ist es weiterhin, wenn die Speicherpufferstatusmeldung periodisch wiederkehrend gesendet wird.

Neben dem Senden einer Speicherpufferstatusmeldung aufgrund eines Ereignisses in einem Telekommunikationsnetz ist auch das Senden zu festgelegten Zeiten denkbar. Beispielsweise kann die Meldung in konstanten Zeitabständen vom zweiten an das erste Modul gesandt werden und dieses zu einer Verlangsamung oder Beschleunigung der Datenübertragung veranlassen. Diese Methode zeichnet sich durch einfache technische Umsetzbarkeit aus.

Die Aufgabe der Erfindung wird weiterhin mit einer Anordnung gelöst, welche zur Durchführung des erfindungsgemäßen Verfahrens vorbereitet ist, und bei dem ein Telekommunikationsnetz ein erstes Modul und ein zweites Modul umfasst, welche für die Übermittlung von Paketdaten unterschiedlicher Prioritätsstufen und für den Austausch von Informationen über Art und Menge der zu übermittelnden Daten, sowie für den Austausch einer Speicherpufferstatusmeldung geeignet sind

Die für das erfindungsgemäße Verfahren genannten Vorteile gelten gleichermaßen für die erfindungsgemäße Anordnung. Auch hier steht eine effiziente Steuerung der Übermittlung von Paketdaten unterschiedlicher Prioritätsstufen in einem Telekommunikationsnetz im Vordergrund.

Günstig ist es dabei,
- wenn als Telekommunikationsnetz ein UMTS Terrestrial Radio Access Network vorgesehen ist,
- wenn als erstes Modul ein Serving Radio Network Controller vorgesehen ist und
- wenn als zweites Modul eine Funkschnittstelle vorgesehen ist.

Die Erfindung eignet sich aus den bereits erwähnten Gründen besonders für ein UMTS Terrestrial Radio Access Network. Hierbei werden Daten von einer Datenquelle über den Serving Radio Network Controller und die Funkschnittstelle an eine Datensenke gesendet, wobei der Zwischenspeicher in der Funkschnittstelle möglichst klein gehalten wird. Die erfindungsgemäße Anordnung ist dabei auf die effiziente und reaktionsschnelle Steuerung der Datenübertragung vorbereitet.

Günstig ist es weiterhin, wenn zwischen dem Serving Radio Network Controller der Funkschnittstelle ein Drift Radio Network Controller vorgesehen ist, welcher für die transparente Übermittlung von Daten und Meldungen geeignet ist.

Der Drift Radio Network Controller, welcher in einem UMTS Terrestrial Radio Access Network zwischen dem Serving Radio Network Controller und der Funkschnittstelle liegt, wird auf diese Weise vergleichsweise gering belastet.

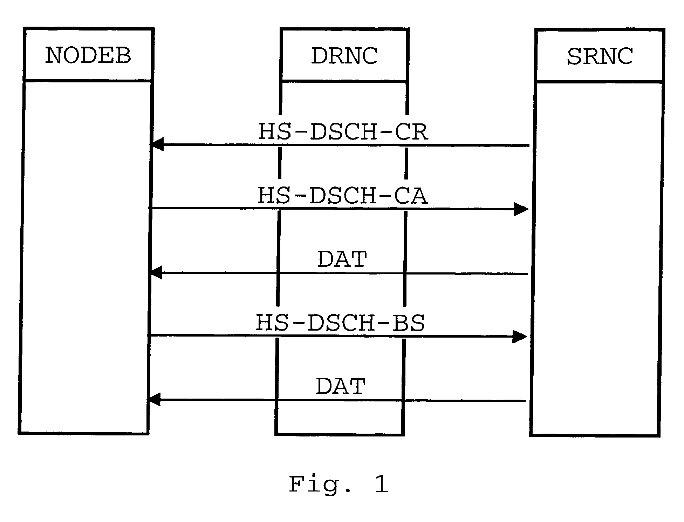

Die Erfindung wird anhand eines in der Figur 1 dargestellten Ausführungsbeispiels näher erläutert, welches einen beispielhaften Meldungsablauf in einem UMTS Terrestrial Radio Access Network betrifft.

Die Figur 1 zeigt eine Funkschnittstelle NODEB, einen Drift Radio Network Controller DRNC und einen Serving Radio Network Controller SRNC. Zwischen der Funkschnittstelle NODEB und dem Serving Radio Network Controller SRNC werden Meldungen ausgetauscht, die durch Pfeile symbolisiert werden.

Diese Meldungen werden im gezeigten Beispiel vom Drift Radio Network Controller DRNC transparent durchgereicht. Da die Art und Weise wie die Daten vom Drift Radio Network Controller DRNC bearbeitet werden jedoch nicht Bestandteil dieser Erfindung ist, beziehungsweise auch das Vorhandensein des Drift Radio Network Controllers DRNC an sich rein beispielhaft zu sehen ist, wird der Drift Radio Network Controller DRNC in Folge nicht näher betrachtet.

Die Funktionsweise des in der Figur 1 dargestellten Ausführungsbeispiels ist wie folgt:

Liegen beim Serving Radio Network Controller SRNC zu übermittelnde Daten an, so wird eine High Speed Downlink Shared Channel Capacity Request Message HS-DSCH-CR an die Funkschnittstelle NODEB gesandt, welche die Prioritätsstufe und den Umfang der zu übermittelnden Daten beinhaltet. In der Funkschnittstelle NODEB wird daraufhin ermittelt, welcher Umfang von Daten einer bestimmten Prioritätsstufe in einem bestimmten Zeitraum übermittelt werden darf. Diese Information wird in Form einer High Speed Downlink Shared Channel Capacity Allocation Message HS-DSCH-CA an den Serving Radio Network Controller SRNC gesendet, welcher in Folge mit der Übertragung der Daten DAT der vereinbarten Prioritätsstufe beginnt.

In der Funkschnittstelle NODEB wird dabei laufend mittels zweier Schwellwerte kontrolliert, ob der Füllgrad des Zwischenspeichers innerhalb eines vorgegebenen Bereichs liegt. Im gezeigten Beispiel wird angenommen, dass der obere Schwellwert überschritten wird und daher ein Überlauf des Speichers droht. Aus diesem Grund wird von der Funkschnittstelle NODEB eine Speicherpufferstatusmeldung HS-DSCH-BS an den Serving Radio Network Controller SRNC gesandt, welcher in Folge die Übertragung der Daten DAT verlangsamt.

Das Senden der Speicherpufferstatusmeldung HS-DSCH-BS kann während der Übertragung der Daten DAT mehrmals erfolgen, je nachdem, ob der Füllgrad des Zwischenspeichers in einem vorgegebenen Bereich bleibt, oder diesen verlässt. Aufgrund der geringen Länge der Meldung wird das Telekommunikationsnetz dabei relativ wenig belastet.

## Patentansprüche

1. Verfahren zur Steuerung der Übermittlung von Paketdaten unterschiedlicher Prioritätsstufen von einem ersten Modul zu einem zweiten Modul in einem Telekommunikationsnetz, insbesondere in einem Mobilfunknetz,
- wobei zwischen erstem Modul und zweitem Modul Informationen über Art und Menge der zu übermittelnden Daten DAT ausgetauscht werden,
**dadurch gekennzeichnet,**
- **dass** während der Datenübermittlung eine Speicherpufferstatusmeldung HS-DSCH-BS vom zweiten Modul an das erste Modul gesandt wird, welche als Parameter eine Prioritätsstufe enthält und zusätzlich eine Information umfasst, welche den aktuellen Füllgrad des Speicherpuffers beim zweiten Modul angibt oder definiert, welcher Umfang von Daten DAT der angegebenen Prioritätsstufe in der verbleibenden Restzeit eines vorab definierten Zeitraums übermittelt werden darf.

2. Verfahren nach Anspruch 1, **dadurch gekennzeichnet,**
- **dass** vom ersten Modul an das zweite Modul eine erste Meldung gesandt wird, welche die Prioritätsstufe und den Umfang der zu übermittelnden Daten DAT enthält,
- **dass** vom zweiten Modul an das erste Modul eine zweite Meldung gesandt wird, welcher Umfang von Daten DAT einer bestimmten Prioritätsstufe in einem bestimmten Zeitraum übermittelt werden darf und
- **dass** das erste Modul nach Erhalt der zweiten Meldung mit der Übertragung von Daten DAT der vereinbarten Prioritätsstufe beginnt,
- **dass** während der Datenübermittlung eine Speicherpufferstatusmeldung HS-DSCH-BS vom zweiten Modul an das erste Modul gesandt wird, welche als Parameter eine Prioritätsstufe enthält und zusätzlich eine Information umfasst, welche den aktuellen Füllgrad des Speicherpuffers beim zweiten Modul angibt oder definiert, welcher Umfang von Daten DAT der angegebenen Prioritätsstufe in der verbleibenden Restzeit des mit Hilfe der zweiten Meldung definierten Zeitraums übermittelt werden darf und
- **dass** das erste Modul mit Hilfe der Speicherpufferstatusmeldung ermittelt, ob die Daten DAT dieser Prioritätsstufe ab dem Erhalt dieser Meldung schneller oder langsamer übertragen werden.

3. Verfahren nach einem der Ansprüche 1 bis 2, **dadurch gekennzeichnet,**
- **dass** als Telekommunikationsnetz ein UMTS Terrestrial Radio Access Network vorgesehen wird,
- **dass** als erstes Modul ein Serving Radio Network Controller SRNC vorgesehen wird und
- **dass** als zweites Modul eine Funkschnittstelle NODEB vorgesehen wird.

4. Verfahren nach einem der Ansprüche 2 bis 3, **dadurch gekennzeichnet,**
- **dass** als Telekommunikationsnetz ein UMTS Terrestrial Radio Access Network vorgesehen wird,
- **dass** als erste Meldung eine High Speed Downlink Shared Channel Capacity Request Message HS-DSCH-CR vorgesehen wird,
- **dass** als zweite Meldung eine High Speed Downlink Shared Channel Capacity Allocation Message HS-DSCH-CA vorgesehen wird und
- **dass** die Speicherpufferstatusmeldung HS-DSCH-BS den Parameter Common Channel Priority Indicator und zusätzlich den Parameter Credits oder eine Information über den momentanen Füllgrad des Speicherpuffers beim zweiten Modul umfasst.

5. Verfahren nach einem der Ansprüche 1 bis 4, **dadurch gekennzeichnet, dass** die Speicherpufferstatusmeldung HS-DSCH-BS aufgrund eines Ereignisses im Telekommunikationsnetz gesendet wird.

6. Verfahren nach einem der Ansprüche 1 bis 4, **dadurch gekennzeichnet, dass** die Speicherpufferstatusmeldung HS-DSCH-BS periodisch wiederkehrend gesendet wird.

7. Anordnung, welche zur Durchführung eines Verfahrens nach einem der Ansprüche 1 bis 6 vorbereitet ist,
**dadurch gekennzeichnet, dass** ein Telekommunikationsnetz ein erstes Modul und ein zweites Modul umfasst, welche für die Übermittlung von Paketdaten unterschiedlicher Prioritätsstufen und für den Austausch von Informationen über Art und Menge der zu übermittelnden Daten DAT, sowie für den Austausch einer Speicherpufferstatusmeldung HS-DSCH-BS geeignet sind.

8. Anordnung nach Anspruch 7, **dadurch gekennzeichnet,**
- **dass** als Telekommunikationsnetz ein UMTS Terrestrial Radio Access Network vorgesehen ist,
- **dass** als erstes Modul ein Serving Radio Network Controller SRNC vorgesehen ist und
- **dass** als zweites Modul eine Funkschnittstelle NODEB vorgesehen ist.

9. Anordnung nach Anspruch 8, **dadurch gekennzeichnet, dass** zwischen dem Serving Radio Network Controller SRNC der Funkschnittstelle NODEB ein Drift Radio Network Controller DRNC vorgesehen ist, welcher für die transparente Übermittlung von Daten DAT und Meldungen geeignet ist.
